# EUROPÄISCHE PATENTSCHRIFT

(11) **EP 4 448 209 B1**
(45) Veröffentlichungstag und Bekanntmachung des Hinweises auf die Patenterteilung: **04.02.2026**
(21) Anmeldenummer: 22829736.2
(22) Anmeldetag: 01.12.2022
(51) Int. Cl.: B23K 26/00, B23K 26/10, B23K 26/38, B23K 31/10, B23K 26/08, B23K 101/18

(54) **LASERSCHNEIDVERFAHREN ZUM ZERTEILEN EINER BLECHTAFEL IN WENIGSTENS EIN WERKSTÜCK UND MEHRERE RESTABSCHNITTE SOWIE LASERBEARBEITUNGSANLAGE**
LASER CUTTING METHOD FOR DIVIDING A SHEET PANEL INTO AT LEAST ONE WORKPIECE AND MULTIPLE REMAINING SECTIONS, AND LASER MACHINING SYSTEM
PROCÉDÉ DE DÉCOUPE LASER POUR DÉCOUPER UNE TÔLE EN AU MOINS UNE PIÈCE ET PLUSIEURS CHUTES ET INSTALLATION D'USINAGE LASER

(30) Priorität: 15.12.2021 DE 102021133319
(43) Veröffentlichungstag der Anmeldung: 23.10.2024
(73) Patentinhaber: TRUMPF Werkzeugmaschinen SE + Co. KG, 71254 Ditzingen (DE)
(72) Erfinder: MACH, Patrick, 71404 Korb (DE)
(74) Vertreter: Trumpf Patentabteilung
(86) Internationale Anmeldenummer: PCT/EP2022/084091
(87) Internationale Veröffentlichungsnummer: WO 2023/110440

(56) Entgegenhaltungen:
- EP-A1- 2 441 547
- WO-A2-2019/025327
- DE-T5- 112016 000 082

## Beschreibung

### Hintergrund der Erfindung

Die Erfindung betrifft ein Laserschneidverfahren zum Ausschneiden wenigstens eines Werkstücks aus einer Blechtafel unter Verbleib eines Restteils, mit den Schritten
- Anordnen der Blechtafel auf einer Auflage einer Laserschneidmaschine;
- Einbringen wenigstens einer Schnittlinie zum Trennen des wenigstens einen Werkstücks von dem Restteil.

Die Erfindung betrifft ferner eine Laserbearbeitungsanlage mit einer Laserschneidmaschine, einer Be- und Entladevorrichtung und einer Steuereinrichtung.

Ein Verfahren der oben genannten Art ist aus JPH 09300300 A bekannt.

Beim 2D-Laserschneiden wird üblicherweise ein Restgitter vor oder nach dem Schneiden der Gutteile (Werkstücke) in kleinere Bereiche zerteilt, die aufgrund des geringeren Gewichts manuell oder automatisiert leichter von einer Werkstückauflage entladen werden können als die Rest-Tafel als Ganzes. Auch große Innenbereiche von Gutteilen, sog. "Abfallteile" oder "Butzen" können in kleinere Teile zerschnitten werden, um sie anschließend leichter entnehmen zu können.

Beim Zerschneiden des Restgitters können allerdings streifenförmige Restgitterbereiche gebildet werden, die nach unten zwischen Tragleisten der Werkstückauflage durchhängen, wenn sie nicht ausreichend durch die Tragleisten der Werkstückauflage gestützt werden. Hierdurch kann es zu einer Kollision mit Greifern oder Rechen einer Entnahmeeinheit kommen. Das Entladen solcher Restgitterbereiche wird erschwert oder sogar unmöglich.

Ein Verzicht auf das Zerkleinern des Restgitters kommt oft nicht in Betracht, da das Restgitter mit den Außenmaßen der Blechtafel bei der Entsorgung Probleme bereitet. So wird die Größe des gesamten Restgitters im unzerkleinerten Zustand typischerweise Chargiermaße für Schrott überschreiten.

Aus der eingangs genannten JPH 09300300 A ist es bekannt, beim Stanzen oder beim Laserschneiden ein verbleibendes Restteil mit Microjoints zu versehen, um das Restteil in kleinere Stücke zerteilen zu können. Die Microjoints können durch Einstanzen von Löchern gebildet werden.

Zudem offenbart DE 11 2016 000082 T5 den Oberbegriff des unabhängigen Anspruchs 15.

### Aufgabe der Erfindung

Es ist eine Aufgabe der Erfindung, eine prozesssichere Entnahme und Zerkleinerung des nach dem Ausschneiden von Werkstücken verbleibenden Restes einer Blechtafel zu ermöglichen.

### Beschreibung der Erfindung

Diese Aufgabe wird erfindungsgemäß gelöst durch ein Verfahren gemäß Anspruch 1 und eine Laserbearbeitungsanlage gemäß Anspruch 15. Die Unteransprüche und die Beschreibung geben vorteilhafte Varianten bzw. Ausführungsformen an.

Erfindungsgemäß ist ein Laserschneidverfahren vorgesehen. Im Rahmen des Verfahrens wird wenigstens ein Werkstück aus einer Blechtafel ausgeschnitten, wobei wenigstens ein Restteil verbleibt.

Die Blechtafel besteht typischerweise aus Metall. Die Blechtafel kann insbesondere aus Stahl bestehen. Eine Dicke der Blechtafel kann wenigstens 4 mm, bevorzugt wenigstens 10 mm, besonders bevorzugt wenigstens 20 mm, ganz besonders bevorzugt wenigstens 40 mm, betragen. Die Dicke der Blechtafel kann höchstens 150 mm, insbesondere höchstens 120 mm, betragen. Eine Kantenlänge der Blechtafel, insbesondere die größte Kantenlänge, kann wenigstens 1 m, bevorzugt wenigstens 2 m, besonders bevorzugt wenigstens 3 m, besonders bevorzugt wenigstens 5 m, beträgt.

Das Verfahren umfasst die folgenden Schritte:
A) Anordnen der Blechtafel auf einer Auflage einer Laserschneidmaschine;
B) Einbringen wenigstens einer Schnittlinie zum Trennen des wenigstens einen Werkstücks von dem Restteil und
   Einbringen wenigstens einer Trennlinie in das Restteil, wobei in einem Hauptbereich der Trennlinie das Restteil durchschnitten wird und wobei in einem Verbindungsbereich der Trennlinie zwischen aneinander angrenzenden Abschnitten des Restteils wenigstens eine Verbindung bestehen bleibt, die eine Höhe aufweist, welche kleiner ist als eine Dicke der Blechtafel;
C) Entnehmen des ganzen Restteils von der Auflage;
D) Trennen der Abschnitte des Restteils voneinander.

Die Schritte A) bis D) werden in der angegebenen Reihenfolge durchgeführt. Die wenigstens eine Schnittlinie und die wenigstens eine Trennline können innerhalb des Schritts B) in beliebiger Reihenfolge oder auch abschnittsweise alternierend eingebracht werden.

Im Schritt A) wird die Blechtafel auf die Auflage der Laserschneidmaschine aufgelegt. Die Blechtafel kann an der Auflage fixiert werden. Die Auflage weist typischerweise diskrete Auflagemittel, beispielsweise parallel und beabstandet zueinander verlaufende Stege, für eine lokal begrenzte Auflage der Blechtafel auf. Die Laserschneidmaschine kann eine 2D-Flachbettmaschine sein.

Im Schritt B) wird ein Laserstrahl auf die Blechtafel gerichtet. Der Laserstrahl kann von einem Bearbeitungskopf der Laserschneidmaschine ausgesandt werden. Der Auftreffpunkt des Laserstrahls auf die Blechtafel wird entlang der Schnittlinie und der Trennlinie bewegt. Hierzu kann der Bearbeitungskopf relativ zu der Auflage verfahren werden.

Zusammen mit dem Laserstrahl kann ein Schneidgasstrahl, beispielsweise Stickstoff und/oder Sauerstoff, auf die Blechtafel gerichtet werden. Der Laserstrahl und der Schneidgasstrahl können gemeinsam aus einer Schneidgasdüse des Bearbeitungskopfs austreten.

Die wenigstens eine Schnittlinie definiert die Form, insbesondere eine Außenkontur und gegebenenfalls eine Innenkontur des wenigstens einen Werkstücks. Das Restteil bzw. eines der Restteile kann ein außenseitig des wenigstens einen Werkstücks gebildetes Restgitter sein. Alternativ oder zusätzlich kann das Restteil bzw. eines der Restteile ein innerhalb des Werkstücks gebildetes Abfallteil (ein sogenannter Butzen) sein.

Über die gesamte Länge der wenigstens einen Schnittlinie wird die Blechtafel typischerweise vollständig durchtrennt. Es kann jedoch auch vorgesehen sein, dass das Werkstück zunächst punktuell mit dem Restteil verbunden bleibt.

In einem Hauptbereich der Trennlinie wird das Restteil bzw. die Blechtafel durchschnitten. Der Hauptbereich umfasst typischerweise mehr als 90 %, bevorzugt mehr als 95 %, besonders bevorzugt mehr als 98 %, der Länge der Trennlinie. In wenigstens einem Verbindungsbereich der Trennlinie bleibt zwischen benachbarten Abschnitten des Restteils wenigstens eine Verbindung bestehen, die eine Höhe aufweist, welche kleiner ist als eine Dicke der Blechtafel. Eine solche Verbindung wird nachfolgend auch als ein "Nanojoint" oder als "Verbindung kleiner Höhe" bezeichnet. Bei der Bewegung entlang eines Segments der Trennlinie wird der Laserstrahl grundsätzlich nicht ausgeschaltet. An jeder Stelle der Trennlinie wird Material entfernt. Die Verbindung wird grundsätzlich auf der vom Auftreffpunkt des Laserstrahls abgewandten Seite des Restteils bzw. der Blechtafel ausgebildet. Die Abschnitte des Restteils bleiben mit anderen Worten miteinander verbunden, wobei sich die Verbindung nicht über die gesamte Dicke der Blechtafel bzw. des Restteils erstreckt. Durch die Verbindung der aneinandergrenzenden Abschnitte kann ein Verkippen einzelne Abschnitte des Restteils verhindert werden.

Vorzugsweise wird im Verbindungsbereich der Trennlinie die Laserleistung reduziert, um die Verbindung kleiner Höhe zu erhalten. Alternativ oder zusätzlich kann eine Schneidgeschwindigkeit erhöht werden oder es kann ein Abstand zwischen einer Schneidgasdüse, durch die der Laserstrahl und ein Schneidgasstrahl auf die Blechtafel bzw. das Werkstück gerichtet werden, vergrößert werden. Durch diese Parameteränderungen wird lokal begrenzt ein vollständiges Durchschneiden der Blechtafel vermieden. Die Durchführung der Parameteränderung(en) zur Erzeugung der Verbindung kleiner Höhe kann wie in WO 2019/025327 A2 beschrieben erfolgen. Insofern wird auf die Beschreibung in WO 2019/025327 A2 Bezug genommen, wobei die hier als Verbindungen kleiner Höhe oder "Nanojoints" bezeichneten Verbindungen in WO 2019/025327 A2 als "Microjoints" bezeichnet werden.

Im Schritt C) wird das ganze Restteil von der Auflage entnommen. Es wird mit anderen Worten die Gesamtheit der miteinander verbundenen Abschnitte des Restteils als Ganzes von der Auflage entnommen. Aufgrund der Verbindung der Abschnitte kann dies besonders einfach erfolgen. Eine Entnahmevorrichtung braucht nicht an jedem einzelnen Abschnitt anzugreifen, sondern nur an einer oder ggf. mehreren geeigneten Stellen des Verbundes. Die Entnahme kann vorzugsweise mit einem mechanischen Greifer erfolgen. Zinken, Gabeln oder Haken des Greifers können unter das Restteil geschoben werden, sodass dieses insgesamt angehoben und von der Auflage entfernt werden kann. Der Greifer kann in der Art eines Rechens ausgebildet sein. Es versteht sich, dass auch andere Greifer beispielsweise Vakuum-Greifer oder Magnet-Greifer eingesetzt werden könnten. Auch eine manuelle Entnahme ist möglich.

Sodann werden im Schritt D) die Abschnitte des Restteils voneinander getrennt. Mit anderen Worten werden die Abschnitte des Restteils vereinzelt. Aufgrund der geringen Höhe der Verbindung(en) kann das Trennen besonders einfach, insbesondere mit geringem Kraftaufwand, erfolgen. Das Trennen kann manuell erfolgen, beispielsweise durch Verkippen der Abschnitte gegeneinander. Alternativ kann das Trennen automatisiert erfolgen, beispielsweise mit einem Brecher. Das Trennen der Abschnitte des Restteils voneinander kann über einem Auffangbehälter für Schrott erfolgen. Eine größte Ausdehnung der einzelnen Abschnitte des Restteils kann höchstens 1,5 m, bevorzugt höchstens 1 m, betragen. Die vorgenannten Maßnahmen vereinfachen die Entsorgung.

Das erfindungsgemäße Verfahren stellt zunächst sicher, dass die einzelnen Abschnitte des Restteils auf der Auflage nicht verkippen können, da sie miteinander verbunden sind. Störungen im Arbeitsablauf werden dadurch vermieden. Die Verbindungen der Abschnitte des Restteils ermöglichen zudem eine besonders einfache Entnahme des gesamten Restteils. Die Stabilität der Verbindungen kleiner Höhe ist ausreichend groß, dass das gesamte Restteil als Einheit gehandhabt werden kann. Gleichzeitig sind die Verbindungen kleiner Höhe hinreichend schwach, sodass die Abschnitte des Restteils leicht voneinander getrennt werden können, nachdem das Restteil aus der Laserschneidmaschine entnommen wurde. Zudem können die Verbindungen kleiner Höhe rationell erzeugt werden. Im Gegensatz zu Verbindungen, welche sich über die gesamte Dicke der Blechtafel erstrecken, ist bei Verbindungen kleiner Höhe ein gesondertes Einstechen und Anfahren nach dem Erstellen der Verbindung nicht erforderlich. Gegenüber einer Verbindung der Abschnitte des Restteils mit Verbindungen, welche sich über die gesamte Dicke der Blechtafel erstrecken, kann die Produktivität durch das Vorsehen von Verbindungen kleiner Höhe um mehr als 3 % gesteigert werden.

Eine Höhe der Verbindung kleiner Höhe kann höchstens die Hälfte, bevorzugt höchstens zwei Fünftel, besonders bevorzugt höchstens ein Drittel, der Dicke der Blechtafel betragen. Insbesondere kann die Höhe der Verbindung höchstens 10 mm, bevorzugt höchstens 5 mm, betragen. Typischerweise beträgt die Höhe der Verbindung wenigstens ein Zehntel, bevorzugt wenigstens ein Viertel, der Dicke der Blechtafel. Insbesondere kann die Höhe der Verbindung wenigstens 1 mm, bevorzugt wenigstens 2 mm, betragen. Eine entlang der Trennlinie gemessene Länge der Verbindung kleiner Höhe höchstens die Hälfte, bevorzugt höchstens ein Drittel, und/oder wenigstens ein Viertel der Dicke der Blechtafel betragen. Mit einer derart bemessenen Verbindung können die Abschnitte des Restteils einerseits sicher aneinander gehalten werden. Andererseits kann das Restteil einfach zerkleinert werden.

Vorzugsweise wird zwischen den Schritten B) und C) das wenigstens eine Werkstück von der Auflage entnommen. In diesem Fall durchtrennen die Schnittlinien grundsätzlich auf ihrer gesamten Länge die Blechtafel. Die separate Entnahme des Werkstücks und des Restteils kann die weitere Handhabung vereinfachen.

Eine ununterbrochene Trennlänge des Hauptbereichs der Trennlinie kann höchstens 400 mm, bevorzugt höchstens 300 mm, betragen. Mit anderen Worten bleibt alle 400 mm, bevorzugt alle 300 mm, wenigstens eine Verbindung kleiner Höhe bestehen. Der maximale Abstand zweier Verbindungen kleiner Höhe beträgt somit höchstens 400 mm, bevorzugt höchstens 300 mm, sofern ein Segment der Trennlinie diese Länge übersteigt. Entsprechend beträgt auch der Abstand einer Verbindung kleiner Höhe von einem äußeren Rand der Blechtafel höchstens 400 mm, bevorzugt höchstens 300 mm. Dadurch kann eine ausreichende Stabilität des Verbundes der Abschnitte des Restteils erhalten werden.

Im Schritt B) können zwei sich kreuzende Trennlinien eingebracht werden. Vorzugsweise bleibt an einem Kreuzungspunkt der Trennlinien in jeder Trennlinie wenigstens eine Verbindung kleiner Höhe bestehen. Besonders bevorzugt bleiben an dem Kreuzungspunkt in jeder Trennlinie zwei Verbindungen kleiner Höhe bestehen. Derart kann ein besonders stabiles Restteil erhalten werden, das dennoch leicht zerkleinert werden kann. Der Abstand der Verbindungen kleiner Höhe vom Kreuzungspunkt kann insbesondere höchstens 5 cm, bevorzugt höchstens 3 cm, besonders bevorzugt höchstens 2 cm, betragen.

Die wenigstens eine Trennlinie kann einen äußeren Rand der Blechtafel erreichen und eine weitere Trennlinie oder die wenigstens eine Schnittlinie an einem Kreuzungspunt kreuzen. Vorzugsweise bleibt in diesem Fall zwischen dem Kreuzungspunkt und dem äußeren Rand der Blechtafel wenigstens eine Verbindung kleiner Höhe bestehen. Die äußeren Abschnitte des Restteils werden dadurch aneinander fixiert. Insbesondere wenn eine Entnahmevorrichtung von außen an dem Restteil angreift, kann durch eine hinreichende Stabilität des Restteils gewährleistet werden.

Besonders bevorzugt erfolgt ein Schnittbeginn beim Einbringen der wenigstens einen Schnittlinie und der wenigstens einen Trennlinie stets an einem äußeren Rand der Blechtafel oder an einer bereits durchtrennten Stelle der Blechtafel. Die bereits durchtrennte Stelle der Blechtafel kann an einer Schnittlinie oder im Hauptbereich einer bereits erzeugten Trennlinie liegen. Ein zeitaufwendiges Einstechen mit dem Laserstrahl in die Blechtafel kann dadurch vermieden werden. Die Bearbeitung der Blechtafel wird dadurch erheblich beschleunigt. Zudem wird die beim Einstechen bestehende Gefahr des Auftretens von Spritzern, welche auf das Werkstück gelangen könnten, vermieden.

Die Trennlinie kann an die Schnittlinie heranreichen. Mit anderen Worten kann die wenigstens eine Trennlinie unmittelbar bis zu dem Werkstück verlaufen. Die zum Zerteilen des Restteils erforderliche Länge der Trennlinie kann dadurch verringert werden. Dies erhöht die Produktivität.

Vorzugsweise erfolgen das Einbringen der Schnittlinie und das Einbringen der Trennlinie in einem kontinuierlichen Schneidvorgang. Der Laserstrahl kann hierzu ohne Unterbrechung entlang der Trennlinie und der Schnittlinie geführt werden. Die Trennlinie und die Schnittlinie können somit ohne Unterbrechung des Schneidvorgangs erstellt werden. Insbesondere ist kein erneutes Einstechen erforderlich.

Die Verbindung kleiner Höhe kann angrenzend an die Schnittlinie ausgebildet werden. Beschädigungen des Werkstücks bzw. Störungen seiner Kontur beim Schneiden der Trennlinie bis an das Werkstück heran können dadurch vermieden werden. Der Schneidvorgang kann unter Ausbildung der Verbindung kleiner Höhe von der Trennlinie in die Schnittlinie bzw. umgekehrt übergehen, ohne dass der Laserstrahl unterbrochen wird. Demgegenüber wäre beim Erstellen einer sich über die gesamte Höhe erstreckenden Verbindung ein aufwendiges Einstechen mit der Gefahr von auf das Werkstück fallenden Spritzern erforderlich.

Aus der Blechtafel können zwei Werkstücke ausgeschnitten werden, die höchstens 10 mm, bevorzugt höchstens 5 mm, besonders bevorzugt höchstens 3 mm, voneinander beabstandet sind. Dadurch wird die Ausnutzung der Blechtafel verbessert. Zwischen diesen beiden Werkstücken kann die Trennlinie mit der Verbindung kleiner Höhe eingebracht werden. Insbesondere befindet sich dabei auch die Verbindung kleiner Höhe in dem Bereich, in welchem die beiden Werkstücke den vorgenannten geringen Abstand aufweisen. Derart kann auch an einer solchen Stelle eine Verbindung der Abschnitte des Restteils erhalten werden, insbesondere wobei die Trennlinie von der Schnittlinie des einen zu der Schnittlinie des anderen Werkstücks verläuft. Eine Verbindung, welche sich über die gesamte Höhe der Blechtafel erstreckt, könnte bei solchermaßen nah beieinander angeordneten Werkstücken nicht erzeugt werden, da der erforderliche Einstechvorgang die Gefahr der Beschädigung der Werkstücke mit sich bringen würde.

In den Rahmen der vorliegenden Erfindung fällt ferner eine Laserbearbeitungsanlage mit einer Laserschneidmaschine, einer Be- und Entladevorrichtung und einer Steuereinrichtung. Die Steuereinrichtung ist dazu programmiert, die Laserschneidmaschine und die Be- und Entladevorrichtung zur Durchführung der Schritte A) bis C) eines oben beschriebenen, erfindungsgemäßen Verfahrens anzusteuern. Die Be- und Entladevorrichtung dient zur Durchführung der Schritte A) und C). Die Laserschneidmaschine dient zur Durchführung des Schritts B). Die Laserbearbeitungsanlage kann ferner eine Trennvorrichtung aufweisen. Die Trennvorrichtung dient zur Durchführung des Schritts D). Die Steuereinrichtung ist vorteilhafterweise dazu programmiert, die Trennvorrichtung zur Durchführung des Schritts D) anzusteuern.

Weitere Merkmale und Vorteile der Erfindung ergeben sich aus der Beschreibung, den Ansprüchen und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: eine erfindungsgemäße Laserbearbeitungsanlage mit einer Laserschneidmaschine und einer Be- und Entladevorrichtung bei der Durchführung eines erfindungsgemäßen Verfahrens, in einer schematischen Perspektivansicht;
- Fig. 2: eine schematische Schnittansicht durch eine Blechtafel im Bereich einer Trennlinie zwischen zwei Abschnitten eines Restteils, wobei eine Verbindung zwischen den beiden Abschnitten sich nicht über die gesamte Dicke der Blechtafel erstreckt;
- Fig. 3: eine Blechtafel mit mehreren Schnittlinien zum Ausschneiden von Werkstücken und mit mehreren Trennlinien zum Zerteilen eines nach dem Ausschneiden der Werkstücke verbleibenden Restteils in mehrere Abschnitte, wobei die Abschnitte des Restteils über Verbindungen kleiner Höhe aneinander gehalten sind, in einer schematischen Draufsicht;
- Fig. 4: eine weitere Blechtafel mit mehreren Schnittlinien und mehreren Trennlinien, wobei die Schnitt- bzw. Trennlinien für einen kontinuierlichen Schneidvorgang ohne Einstechen stets an einem äußeren Rand der Blechtafel oder in einem bereits durchtrennten Bereich der Blechtafel beginnen, in einer schematischen Draufsicht;
- Fig. 5: den linken oberen Bereich aus Figur 4 in einer vergrößerten Darstellung, mit eingezeichnetem Schneidverlauf;
- Fig. 6: ein schematisches Ablaufdiagramm eines erfindungsgemäßen Verfahrens.

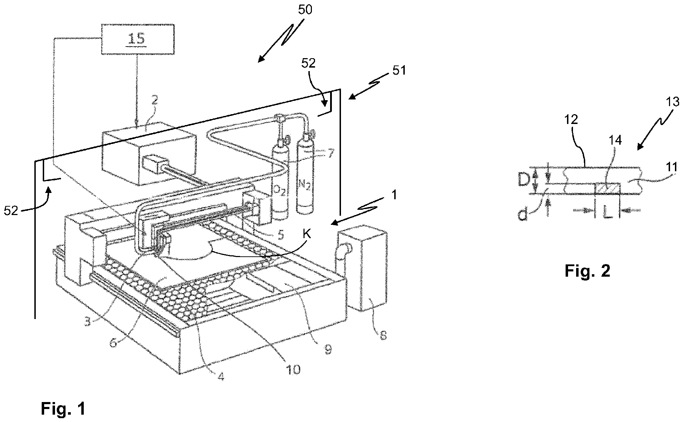

Die in **Figur 1** perspektivisch dargestellte Laserschneidmaschine **1** weist beispielsweise einen CCVLaser, Diodenlaser oder Festkörperlaser als Laserstrahlerzeuger **2,** einen verfahrbaren (Laser)Bearbeitungskopf **3** und eine Auflage **4** auf. Im Laserstrahlerzeuger 2 wird ein Laserstrahl **5** erzeugt, der mittels eines (nicht gezeigten) Lichtleitkabels oder (nicht gezeigten) Umlenkspiegeln vom Laserstrahlerzeuger 2 zum Bearbeitungskopf 3 geführt wird. Auf der Auflage 4 ist eine Blechtafel **6** angeordnet. Zum Verbringen der Blechtafel 6 auf die Auflage 4 kann eine Laserbearbeitungsanlage **50** mit der Laserschneidmaschine 1 eine Be- und Entladevorrichtung **51** aufweisen. Die Be- und Entladevorrichtung 51 ist hier beispielhaft in der Art eines verfahrbaren Portals mit mechanischen Greifern **52** zum Untergreifen der Blechtafel 6 dargestellt.

Der Laserstrahl 5 wird mittels einer im Bearbeitungskopf 3 angeordneten Fokussieroptik auf die Blechtafel 6 gerichtet. Die Laserschneidmaschine 1 wird darüber hinaus mit Schneidgasen **7,** beispielsweise Sauerstoff und Stickstoff, versorgt. Die Verwendung des jeweiligen Schneidgases 7 ist vom Material der Blechtafel 6 und von Qualitätsanforderungen an die Schnittkanten abhängig. Weiterhin ist eine Absaugeinrichtung 8 vorhanden, die mit einem Absaugkanal **9,** der sich unter der Auflage 4 befindet, verbunden ist. Das Schneidgas 7 wird einer Schneidgasdüse **10** des Bearbeitungskopfes 3 zugeführt, aus der es zusammen mit dem Laserstrahl 5 austritt.

Beim Laserschneiden wird die Blechtafel 6 entlang einer gewünschten Bahnkurve K mittels des Laserstrahls 5 mit einer zum Durchschneiden der Blechtafel ausreichenden Laserleistung (Schneidleistung) geschnitten. Die Bahnkurve kann eine Schnittlinie an einem auszuschneidenden Werkstück und/oder eine Trennlinie zwischen Abschnitten eines verbleibenden Restteils bilden. Vorliegend der Laserstrahl 5, alternativ oder zusätzlich aber auch die Blechtafel 6, bewegt wird.

Wie in **Figur 2** gezeigt, werden beim Laserschneiden der Blechtafel 6 in einer Trennlinie **11** zwischen aneinander angrenzenden Abschnitten **12** eines Restteils **13** der Blechtafel 6 Verbindungen **14** in Form von Stegen bzw. Nanojoints stehen gelassen. Die Verbindungen 14 fixieren die Abschnitte 12 des Restteils 13 aneinander und verhindern somit ein Verkippen gegenüber dem jeweils angrenzenden Abschnitt 12 bzw. der Auflage 4. Zudem kann aufgrund der Verbindungen 14 das Restteil 13 im Verbund gehandhabt werden.

Wie in Figur 2 gezeigt, erstreckt sich der Nanojoint 14 nicht über die gesamte Dicke **D** der Blechtafel 6, sondern hier nur im unteren Drittel, weist also eine geringere Höhe **d** als die Dicke D auf. Daher wird der Nanojoint hier auch als eine Verbindung 14 kleiner Höhe bezeichnet. Eine Länge **L** des Nanojoints 14 ist entlang der Trennlinie 11 kleiner als die Dicke D; vorzugsweise beträgt die Länge L des Nanojoints 14 weniger als die Hälfte der Dicke D.

Der Längenbereich der Bahnkurve K, in welchem die jeweiligen Nanojoints 14 ausgebildet werden, wird hier auch als ein Verbindungsbereich der Trennlinie 11 bezeichnet. Der Längenbereich der Trennlinie 11, in welchem die Blechtafel 6 vollständig durchschnitten wird, wird auch als ein Hauptbereich der Trennlinie 11 bezeichnet.

Im Folgenden wird das Erstellen der Verbindungen 14 am Beispiel der Variation der Laserleistung beschrieben. Bei dieser Variante des Verfahrens werden die Nanojoints 14 allein durch gezieltes Anpassen der Laserleistung während des Schneidprozesses mittels geeignet gewählter Leistungsgradienten generiert, die von einer in Fig. 1 gezeigten Steuereinrichtung **15** der Laserschneidmaschine 1 in Abhängigkeit des Werkstückmaterials vorgegeben werden. Die Steuereinrichtung 15 steuert auch die Bewegung des Bearbeitungskopfes 3 gegenüber der Blechtafel 6 sowie die Be- und Entladevorrichtung 51.

Dem Schneidprozess steht durch die abgesenkte Laserleistung nicht mehr die für einen vollständigen Schnitt benötigte Streckenenergie zur Verfügung. Das Material wird daher nicht über die komplette Dicke D der Blechtafel 6, sondern nur in einem oberen Bereich aufgeschmolzen. Stattdessen bleibt im unteren Bereich der Trennlinie 11 bzw. der Schnittkante ein Nanojoint 14 zwischen den benachbarten Abschnitten 12 des Restteils 13 stehen.

Bis auf die Laserleistung können bei der Erzeugung des Nanojoints 14 alle anderen Schneidparameter des Laserschneidens unverändert bleiben, also z. B. die Fokuslage des Laserstrahls 5, der Abstand der Schneidgasdüse 10 zur Werkstückoberfläche, der Schneidgasdruck und die Schneidgeschwindigkeit. Nach der Erzeugung des Nanojoints 14 wird mit den Standardparametern weitergeschnitten.

Zum Erzeugen des Nanojoints 14 mit einer geringeren Höhe d als die Blechdicke D wird beim Laserschneiden der Blechtafel 6 die Laserleistung des Laserstrahls 5 auf einem der Länge L des Nanojoints 14 entsprechenden Teilstück der Bahnkurve K von der zum Durchschneiden der Blechtafel 6 ausreichenden, höheren Laserleistung (Schneidleistung) auf eine zum vollständigen Durchschneiden der Blechtafel 6 nicht ausreichende, niedrigere Laserleistung (Senkleistung) abgesenkt und anschließend wieder auf die höhere Laserleistung (Schneidleistung) erhöht. Bei der Bearbeitung mit der niedrigen Laserleistung (Senkleistung) wird oberhalb der Nanojoints 14 eine Einsenkung in der Blechtafel 6 erzeugt.

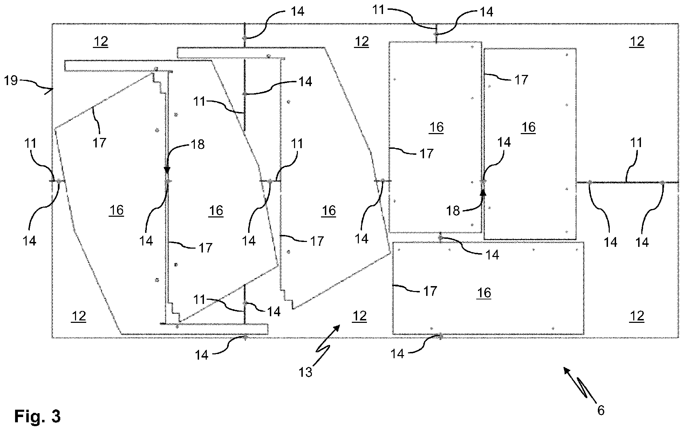

**Figur 3** zeigt eine Blechtafel 6 nach dem Laserschneiden. Mehrere Werkstücke **16** sind entlang von Schnittlinien **17** ausgeschnitten. Die Schnittlinien 17 können je eine Außenkontur oder eine Innenkontur des zugehörigen Werkstücks 16 bilden.

Der übrige Bereich der Blechtafel 6 bildet ein Restteil 13. Das Restteil 13 ist entlang von Trennlinien 11 in mehrere Abschnitte 12 unterteilt. Benachbarte Abschnitte 12 sind über jeweils wenigstens eine Verbindung 14 in der zwischen den beiden Abschnitten 12 verlaufenden Trennlinie 11 miteinander verbunden. Das Restteil 13 kann somit als Ganzes von der Auflage 4 entnommen werden. Die Verbindungen 14 sind hier aus Gründen der Darstellbarkeit mit Punkten markiert, die breiter sind als die Linien, welche die Trennlinien 11 kennzeichnen; gleichwohl erstrecken sich die Verbindungen 14 zwischen den Flanken der beiden an die Trennlinie 11 grenzenden Abschnitte 12, vergleiche Figur 2. Typischerweise werden vor der Entnahme des Restteils 13 die Werkstücke 16 entnommen.

Anschließend können die einzelnen Abschnitte 12 des Restteils 13 voneinander getrennt werden. Die Verbindungen 14 werden hierzu zerbrochen. Aufgrund der geringen Höhe d kann dies manuell erfolgen. Durch die Zerkleinerung des Restteils 13 in die einzelnen Abschnitte 12 wird die Entsorgung vereinfacht.

Bereichsweise können die Werkstücke 16 einen geringen Abstand von beispielsweise weniger als 10 mm aufweisen. Auch in diesen Bereichen **18** geringen Abstands können die Trennlinien 11 jeweils mit einer Verbindung 14 ausgebildet sein.

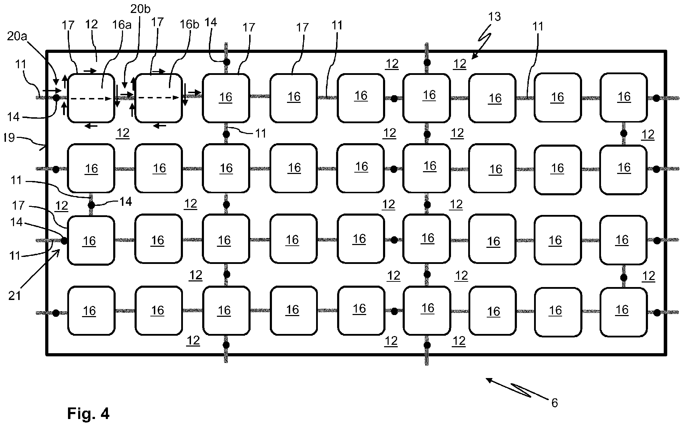

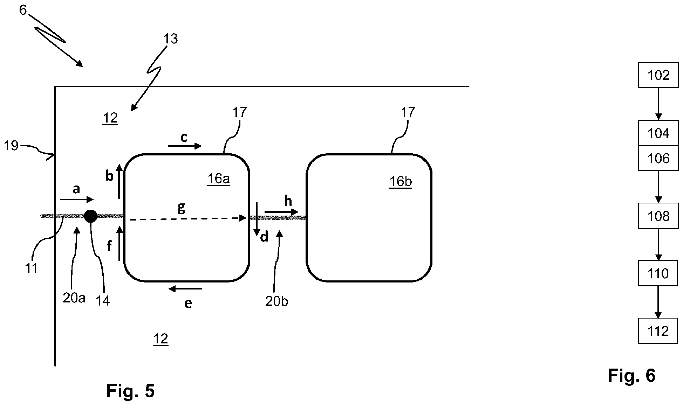

**Figur 4** zeigt eine weitere Blechtafel 6 mit Schnittlinien 17, welche Werkstücke 16 umgeben, und mit Trennlinien 11, welche ein Restteil 13 in mehrere Abschnitte 12 untergliedern. Im linken oberen Bereich von Figur 4 ist mit Pfeilen ein Ablauf des Schneidvorgangs beim Einbringen der Schnittlinien 17 und der Trennlinien 11 angedeutet; dies ist in **Figur 5** vergrößert dargestellt, wobei der zeitliche Ablauf der Bearbeitung durch die Buchstaben a bis h gekennzeichnet ist.

Der Schneidvorgang beginnt hier an einem äußeren Rand **19** der Blechtafel 6. Ein Einstechen in die Blechtafel ist nicht erforderlich. Zur Verdeutlichung, dass der Laserstrahl 5 bereits eingeschaltet ist, bevor er die Blechtafel 6 trifft, sind die Trennlinien 11 über den Rand 19 nach außen verlängert dargestellt. Zunächst wird ein erstes Segment **20a** der Trennlinie 11 von dem äußeren Rand 19 ausgehend eingebracht, vergleiche Pfeil **a.** Das erste Segment 20a der Trennlinie 11 verläuft bis zu einem ersten Werkstück **16a.** Zwischen dem äußeren Rand 19 und dem Werkstück 16a wird eine Verbindung 14 in der Trennlinie 11 erzeugt.

Sobald der Laserstrahl 5 beim Einbringen der Trennlinie 11 das Werkstück 16a erreicht hat, wird die Schnittlinie 17 um das Werkstück 16a herum eingebracht, vergleiche Pfeile **b** bis **f.** Der Schneidvorgang läuft hierzu ununterbrochen fort. Das erste Segment 20a der Trennlinie 11 und die Schnittlinie 17 werden mit anderen Worten in einem kontinuierlichen Schneidvorgang erzeugt.

Nachdem das Werkstück 16a vollständig ausgeschnitten wurde, wird der Laserstrahl 5 ausgeschaltet. Sodann wird Bearbeitungskopf 3 bei ausgeschaltetem Laserstrahl an den Beginn eines zweiten Segments **20b** der Trennlinie 11 verfahren, vergleiche Pfeil **g.**

Das zweite Segment 20b beginnt unmittelbar an dem Werkstück 16a im Bereich der Schnittlinie 17, welche die Blechtafel 6 durchtrennt. Auch hier ist am Beginn des Schneidvorgangs kein Einstechen in die Blechtafel 6 erforderlich. Der Schneidvorgang verläuft entlang des zweiten Segments 20b der Trennlinie 11 zu einem zweiten Werkstück **16b.** Die Schnittlinie 17 um das zweite Werkstück 16b herum kann wiederum in einem kontinuierlichen Schneidvorgang mit dem zweiten Segment 20b Trennlinie 11 erzeugt werden.

In der vorbeschriebenen Weise können weitere Segmente der Trennlinie 11 bzw. weitere Trennlinien 11 eingebracht und weitere Werkstücke 16 ausgeschnitten werden. Bei der Blechtafel 6 von Figur 4 beginnen alle Schneidvorgänge entweder an dem äußeren Rand 19 oder an einer Stelle der Blechtafel 6, welche bereits vollständig von einer Schnittlinie 17 oder einer Trennlinie 11 durchtrennt wurde.

Bei dem Hinweispfeil **21** ist beispielhaft eingezeichnet, dass eine Verbindung 14 kleiner Höhe auch unmittelbar angrenzend an eine Schnittlinie 17 vorgesehen sein kann. Auch dabei können die Trennlinie 11 mit der Verbindung 14 und die angrenzende Schnittlinie 17 in einem kontinuierlichen Schneidvorgang erzeugt fördern.

**Figur 6** zeigt zusammenfassendes Ablaufdiagramm eines Verfahrens zum Ausschneiden wenigstens eines Werkstücks 16, vorzugsweise mehrerer Werkstücke aus einer Blechtafel 6, wobei ein Restteil 13 übrig bleibt. Das Verfahren kann mit der Laserbearbeitungsanlage 50 von Figur 1 durchgeführt werden und beispielsweise der Bearbeitung der Blechtafeln 6 gemäß Figur 3 oder Figur 4 dienen.

In einem Schritt **102** wird die Blechtafel auf einer Auflage 4 einer Laserschneidmaschine 1 angeordnet. Dies kann mithilfe einer Be- und Entladevorrichtung 51 erfolgen.

In einem Schritt **104** wird wenigstens eine Schnittlinie 17 in die Blechtafel 6 eingebracht. Die Schnittlinie 17 trennt das Werkstück 16 von dem Restteil 13. In einem Schritt **106** wird wenigstens eine Trennlinie 11 in die Blechtafel 6 eingebracht. Die Trennlinie 11 unterteilt das Restteil 13 in mehrere Abschnitte 12. In der Trennlinie 11 wird wenigstens eine Verbindung 14 ausgebildet, welche die aneinander angrenzenden Abschnitt 12 des Restteils 13 miteinander verbindet. Die Verbindung 14 weist eine Höhe d auf, welche kleiner ist als eine Dicke D der Blechtafel 6.

Die Schritte 104 und 106 können in beliebiger Reihenfolge nacheinander oder abwechselnd durchgeführt werden. Insbesondere können Segmente der Trennlinien 11 und der Schnittlinien 17 ununterbrochen ineinander übergehen. Bei einem ununterbrochenen Schneidvorgang oder bei mehreren separaten Schneidvorgängen kann mehrfach zwischen dem Erzeugen von Trennlinien 11 und Schnittlinien 17 gewechselt werden.

Sodann können in einem Schritt **108** die ausgeschnittenen Werkstücke 16 von der Auflage 4 entnommen werden. Hierzu kann die Be- und Entladevorrichtung 51 eingesetzt werden. Die Be- und Entladevorrichtung 51 kann einen Sauger zur Handhabung der Werkstücke 16 aufweisen.

Anschließend wird in einem Schritt **110** das gesamte Restteil 13 von der Auflage 4 entnommen. Die Abschnitte 12 des Restteils 13 werden dabei als eine Einheit gehandhabt. Dies kann mit der Be- und Entladevorrichtung 51 erfolgen. Hierzu können Zinken eines Greifers 52 zwischen Auflagestegen der Auflage 4 unter das Restteil 13 geschoben werden.

Nach der Entnahme wird das Restteil 13 in einem Schritt **112** in die einzelnen Abschnitte 12 zerteilt. Hierzu werden die Verbindungen 14 getrennt, beispielsweise zerbrochen.

### Bezugszeichenliste

Laserschneidmaschine **1**
Laserstrahlerzeuger **2**
Bearbeitungskopf **3**
Auflage **4**
Laserstrahl **5**
Blechtafel **6**
Schneidgase **7**
Absaugeinrichtung **8**
Absaugkanal **9**
Schneidgasdüse **10**
Trennlinie **11**
Abschnitt **12**
Restteil **13**
Verbindung (Nanojoint) **14**
Steuereinrichtung **15**
Werkstück **16, 16a, 16b**
Schnittlinie **17**
Bereiche **18** geringen Abstands
äußerer Rand **19**
Segmente **20a, 20b**
Hinweispfeil **21**
Laserbearbeitungsanlage **50**
Be- und Entladevorrichtung **51**
Greifer **52**
Anordnen **102** einer Blechtafel 6 auf einer Auflage 4
Einbringen **104** einer Schnittlinie 17
Einbringen **106** einer Trennlinie 11
Entnehmen **108** von Werkstücken 16
Entnehmen **110** eines Restteils 13
Trennen **112** von Abschnitten 12 des Restteils 13
Bahnkurve **K**
Dicke **D** der Blechtafel 6
Höhe **d** der Verbindungen 14
Länge **L** der Verbindungen 14
Pfeile **a - h**

## Patentansprüche

1. Laserschneidverfahren zum Ausschneiden wenigstens eines Werkstücks (16, 16a, 16b) aus einer Blechtafel (6) unter Verbleib eines Restteils (13), mit den Schritten
A) Anordnen (102) der Blechtafel (6) auf einer Auflage (4) einer Laserschneidmaschine (1);
B) Einbringen (104) wenigstens einer Schnittlinie (17) zum Trennen des wenigstens einen Werkstücks (16, 16a, 16b) von dem Restteil (13) und
Einbringen (106) wenigstens einer Trennlinie (11) in das Restteil (13), wobei in einem Hauptbereich der Trennlinie (11) das Restteil (13) durchschnitten wird und wobei in einem Verbindungsbereich der Trennlinie (11) zwischen aneinander angrenzenden Abschnitten des Restteils (13) wenigstens eine Verbindung (14) bestehen bleibt, die eine Höhe (d) aufweist, welche kleiner ist als eine Dicke (D) der Blechtafel (6);
C) Entnehmen (110) des ganzen Restteils (13) von der Auflage (4);
D) Trennen (112) der Abschnitte (12) des Restteils (13) voneinander.

2. Verfahren nach Anspruch 1, **dadurch gekennzeichnet, dass** im Verbindungsbereich der Trennlinie (11) die Laserleistung gegenüber dem Hauptbereich reduziert wird.

3. Verfahren nach einem der vorhergehenden Ansprüche, **dadurch gekennzeichnet, dass** eine Höhe (d) der Verbindung (14) kleiner Höhe höchstens die Hälfte, bevorzugt höchstens zwei Fünftel, besonders bevorzugt höchstens ein Drittel, der Dicke (D) der Blechtafel (6) beträgt.

4. Verfahren nach einem der vorhergehenden Ansprüche, **dadurch gekennzeichnet, dass** eine entlang der Trennlinie (11) gemessene Länge (L) der Verbindung (14) kleiner Höhe höchstens die Hälfte, bevorzugt höchstens ein Drittel, und/oder wenigstens ein Viertel der Dicke (D) der Blechtafel (6) beträgt.

5. Verfahren nach einem der vorhergehenden Ansprüche, **dadurch gekennzeichnet, dass** zwischen den Schritten B) und C) das wenigstens eine Werkstück (16, 16a, 16b) von der Auflage (4) entnommen wird.

6. Verfahren nach einem der vorhergehenden Ansprüche, **dadurch gekennzeichnet, dass** eine ununterbrochene Trennlänge des Hauptbereichs der Trennlinie (11) höchstens 400 mm, bevorzugt höchstens 300 mm, beträgt.

7. Verfahren nach einem der vorhergehenden Ansprüche, dass im Schritt B) zwei sich kreuzende Trennlinien (11) eingebracht werden, und dass an einem Kreuzungspunkt der Trennlinien (11) in jeder Trennlinie (11) wenigstens eine Verbindung (14) kleiner Höhe bestehen bleibt, vorzugsweise zwei Verbindungen (14) kleiner Höhe bestehen bleiben.

8. Verfahren nach einem der vorhergehenden Ansprüche, **dadurch gekennzeichnet, dass** die Trennlinie (11) einen äußeren Rand (19) der Blechtafel (6) erreicht und eine weitere Trennlinie (11) oder die wenigstens eine Schnittlinie (17) an einem Kreuzungspunt kreuzt, und dass zwischen dem Kreuzungspunkt und dem äußeren Rand (19) der Blechtafel (6) wenigstens eine Verbindung (14) kleiner Höhe bestehen bleibt.

9. Verfahren nach einem der vorhergehenden Ansprüche, **dadurch gekennzeichnet, dass** ein Schnittbeginn beim Einbringen der wenigstens einen Schnittlinie (17) und der wenigstens einen Trennlinie (11) stets an einem äußeren Rand (19) der Blechtafel (6) oder an einer bereits durchtrennten Stelle der Blechtafel (6) erfolgt.

10. Verfahren nach einem der vorhergehenden Ansprüche, **dadurch gekennzeichnet, dass** die Trennlinie (11) an die Schnittlinie (17) heranreicht.

11. Verfahren nach Anspruch 10, **dadurch gekennzeichnet, dass** das Einbringen der Schnittlinie (17) und das Einbringen der Trennlinie (11) in einem kontinuierlichen Schneidvorgang erfolgen.

12. Verfahren nach Anspruch 10 oder 11, **dadurch gekennzeichnet, dass** die Verbindung (14) kleiner Höhe angrenzend an die Schnittlinie (17) ausgebildet wird.

13. Verfahren nach einem der vorhergehenden Ansprüche, **dadurch gekennzeichnet, dass** zwischen zwei Werkstücken (16), die höchstens 10 mm, bevorzugt höchstens 5 mm, besonders bevorzugt höchstens 3 mm, voneinander beabstandet sind, die Trennlinie (11) mit der Verbindung (14) kleiner Höhe eingebracht wird.

14. Verfahren nach einem der vorhergehenden Ansprüche, **dadurch gekennzeichnet, dass** die Dicke (D) der Blechtafel (6) wenigstens 4 mm, bevorzugt wenigstens 10 mm, besonders bevorzugt wenigstens 20 mm, ganz besonders bevorzugt wenigstens 40 mm, beträgt.

15. Laserbearbeitungsanlage (50) mit einer Laserschneidmaschine (1), einer Be- und Entladevorrichtung (51) und einer Steuereinrichtung (15), **dadurch gekennzeichnet, dass** die Steuereinrichtung (15) dazu programmiert ist, die Laserschneidmaschine (1) und die Be- und Entladevorrichtung (51) zur Durchführung der Schritte A) bis C) eines Verfahrens nach einem der vorhergehenden Ansprüche anzusteuern.

## Claims

1. A laser cutting method for cutting out at least one workpiece (16, 16a, 16b) from a sheet metal panel (6), leaving behind a residual part (13), comprising the steps
A) arranging (102) the sheet metal panel (6) on a support (4) of a laser cutting machine (1);
B) introducing (104) at least one cutting line (17) for separating the at least one workpiece (16, 16a, 16b) from the residual part (13) and
introducing (106) at least one separating line (11) into the residual part (13), wherein in a main region of the separating line (11) the residual part (13) is cut through, and wherein in a connecting region of the separating line (11) between sections of the residual part (13) that are adjacent to one another at least one connection (14) remains behind, the connection having a height (d) that is less than a thickness (D) of the sheet metal panel (6);
C) removing (110) the entire residual part (13) from the support (4);
D) separating (112) the sections (12) of the residual part (13) from one another.

2. The method according to claim 1, **characterized in that** in the connecting region of the separating line (11) the laser power is reduced in comparison to the main region.

3. The method according to any one of the preceding claims, **characterized in that** a height (d) of the connection (14) of less height is at most half, preferably at most two fifths, particularly preferably at most one third, of the thickness (D) of the sheet metal panel (6).

4. The method according to any one of the preceding claims, **characterized in that** a length (L) of the connection (14) of less height, measured along the separating line (11), is at most half, preferably at most one third, and/or at least one fourth of the thickness (D) of the sheet metal panel (6).

5. The method according to any one of the preceding claims, **characterized in that** the at least one workpiece (16, 16a, 16b) is removed from the support (4) between the steps B) and C).

6. The method according to any one of the preceding claims, **characterized in that** an uninterrupted separation length of the main region of the separating line (11) is at most 400 mm, preferably at most 300 mm.

7. The method according to any one of the preceding claims, that in step B) two intersecting separating lines (11) are introduced, and that at least one connection (14) of less height, preferably two connections (14) of less height, remain behind in each separating line (11) at a point of intersection of the separating lines (11).

8. The method according to any one of the preceding claims, **characterized in that** the separating line (11) reaches an outer edge (19) of the sheet metal panel (6) and intersects a further separating line (11) or the at least one cutting line (17) at a point of intersection, and that at least one connection (14) of less height remains behind between the point of intersection and the outer edge (19) of the sheet metal panel (6).

9. The method according to any one of the preceding claims, **characterized in that** when introducing the at least one cutting line (17) and the at least one separating line (11), a beginning of cutting always takes place at an outer edge (19) of the sheet metal panel (6) or at a point on the sheet metal panel (6) that has already been severed.

10. The method according to any one of the preceding claims, **characterized in that** the separating line (11) reaches the cutting line (17).

11. The method according to claim 10, **characterized in that** the introducing of the cutting line (17) and the introducing of the separating line (11) take place in a continuous cutting process.

12. The method according to claim 10 or 11, **characterized in that** the connection (14) of less height is designed to abut the cutting line (17).

13. The method according to any one of the preceding claims, **characterized in that** the separating line (11) with the connection (14) of less height is introduced between two workpieces (16) which are at a distance from one another of at most 10 mm, preferably at most 5 mm, particularly preferably at most 3 mm.

14. The method according to any one of the preceding claims, **characterized in that** the thickness (D) of the sheet metal panel (6) is at least 4 mm, preferably at least 10 mm, particularly preferably at least 20 mm, especially preferably at least 40 mm.

15. A laser processing system (50) with a laser cutting machine (1), a loading and unloading device (51) and a control unit (15), **characterized in that** the control unit (15) is programmed to actuate the laser cutting machine (1) and the loading and unloading device (51) for carrying out the steps A) to C) of a method according to any one of the preceding claims.

## Revendications

1. Procédé de découpe au laser pour découper au moins une pièce (16, 16a, 16b) à partir d'une plaque de tôle (6) en laissant une partie restante (13), avec comme étapes
A) la disposition (102) de la plaque de tôle (6) sur un support (4) d'une machine de découpe au laser (1) ;
B) l'introduction (104) d'au moins une ligne de coupe (17) pour séparer l'au moins une pièce (16, 16a, 16b) de la partie restante (13) et
l'introduction (106) d'au moins une ligne de séparation (11) dans la partie restante (13), dans lequel, dans une zone principale de la ligne de séparation (11), la partie restante (13) est tranchée et dans lequel, dans une zone de liaison de la ligne de séparation (11) entre des sections adjacentes de la partie restante (13), au moins une liaison (14) subsiste, qui présente une hauteur (d) qui est inférieure à une épaisseur (D) de la plaque de tôle (6) ;
C) le retrait (110) de toute la partie restante (13) du support (4) ;
D) la séparation (112) des sections (12) de la partie restante (13) les unes des autres.

2. Procédé selon la revendication 1, **caractérisé en ce que**, dans la zone de liaison de la ligne de séparation (11), la puissance laser est réduite par rapport à la zone principale.

3. Procédé selon l'une quelconque des revendications précédentes, **caractérisé en ce qu'**une hauteur (d) de la liaison (14) de faible hauteur s'élève au maximum à la moitié, préférentiellement au maximum aux deux cinquièmes, plus préférentiellement au maximum au tiers de l'épaisseur (D) de la plaque de tôle (6).

4. Procédé selon l'une quelconque des revendications précédentes, **caractérisé en ce qu'**une longueur (L) de la liaison (14) de faible hauteur, mesurée le long de la ligne de séparation (11), s'élève au maximum à la moitié, préférentiellement au maximum à un tiers, et/ou au moins à un quart de l'épaisseur (D) de la plaque de tôle (6).

5. Procédé selon l'une quelconque des revendications précédentes, **caractérisé en ce qu'**entre les étapes B) et C), l'au moins une pièce (16, 16a, 16b) est retirée du support (4).

6. Procédé selon l'une quelconque des revendications précédentes, **caractérisé en ce qu'**une longueur de séparation ininterrompue de la zone principale de la ligne de séparation (11) s'élève au maximum à 400 mm, préférentiellement au maximum à 300 mm.

7. Procédé selon l'une quelconque des revendications précédentes, dans lequel, à l'étape B), deux lignes de séparation (11) qui se croisent sont introduites et, au niveau d'un point d'intersection des lignes de séparation (11), au moins une liaison (14) de faible hauteur subsiste dans chaque ligne de séparation (11), préférentiellement deux liaisons (14) de faible hauteur subsistent.

8. Procédé selon l'une quelconque des revendications précédentes, **caractérisé en ce que** la ligne de séparation (11) atteint un bord extérieur (19) de la plaque de tôle (6) et croise une autre ligne de séparation (11) ou l'au moins une ligne de coupe (17) en un point d'intersection, et **en ce qu'**au moins une liaison (14) de faible hauteur subsiste entre le point d'intersection et le bord extérieur (19) de la plaque de tôle (6).

9. Procédé selon l'une quelconque des revendications précédentes, **caractérisé en ce qu'**un début de coupe lors de l'introduction de l'au moins une ligne de coupe (17) et de l'au moins une ligne de séparation (11) s'effectue toujours au niveau d'un bord extérieur (19) de la plaque de tôle (6) ou au niveau d'un emplacement déjà séparé de la plaque de tôle (6).

10. Procédé selon l'une quelconque des revendications précédentes, **caractérisé en ce que** la ligne de séparation (11) s'étend jusqu'à la ligne de coupe (17).

11. Procédé selon la revendication 10, **caractérisé en ce que** l'introduction de la ligne de coupe (17) et l'introduction de la ligne de séparation (11) s'effectuent au cours d'un processus de coupe continu.

12. Procédé selon la revendication 10 ou 11, **caractérisé en ce que** la liaison (14) de faible hauteur est réalisée adjacente à la ligne de coupe (17).

13. Procédé selon l'une quelconque des revendications précédentes, **caractérisé en ce que**, entre deux pièces (16) qui sont espacées d'au maximum 10 mm, préférentiellement d'au maximum 5 mm, et plus préférentiellement d'au maximum 3 mm, la ligne de séparation (11) est introduite avec la liaison (14) de faible hauteur.

14. Procédé selon l'une quelconque des revendications précédentes, **caractérisé en ce que** l'épaisseur (D) de la plaque de tôle (6) est d'au moins 4 mm, préférentiellement d'au moins 10 mm, plus préférentiellement d'au moins 20 mm, et au plus préférentiellement d'au moins 40 mm.

15. Installation d'usinage au laser (50) comprenant une machine de découpe au laser (1), un dispositif de chargement et de déchargement (51) et un dispositif de commande (15), **caractérisée en ce que** le dispositif de commande (15) est programmé pour commander la machine de découpe au laser (1) et le dispositif de chargement et de déchargement (51) pour l'exécution des étapes A) à C) d'un procédé selon l'une quelconque des revendications précédentes.
